# EUROPEAN PATENT APPLICATION

(11) **EP 1 895 527 A1**
(43) Date of publication of application: **05.03.2008**
(21) Application number: 07016350.6
(22) Date of filing: 21.08.2007
(51) Int. Cl.: G11B 7/135

(54) **Optical pickup device**

(30) Priority: 24.08.2006 JP 2006227915
(71) Applicant: Funai Electric Co., Ltd., Daito-shi, Osaka 574-0031 (JP)
(72) Inventor: Takemoto, Seiji, Daito-shi Osaka 574-0013 (JP); Fujii, Hitoshi, Daito-shi Osaka 574-0013 (JP); Nagashima, Kenji, Daito-shi Osaka 574-0013 (JP)
(74) Representative: Beetz & Partner

(57) **Abstract**

In an optical pickup device which is compatible with two light beam having two wavelengths, a beam shaping mirror is arranged which has an incident surface and a reflecting surface that are disposed in non parallel relation, and makes light intensity distribution of the light beam emitted from a light source that has the light intensity distribution in a shape of ellipse, close to a circular shape by reflecting the light beam coming into the incident surface by the reflecting surface. A diffraction grating is formed on the reflecting surface of the beam shaping mirror, at least one of the two light beams having different wavelengths emitted from the light source is diffracted by the diffraction grating, and directions of optical axes of the two light beams which are output from the beam shaping mirror are made substantially the same.

## Description

### BACKGROUND OF THE INVENTION

### Field of the Invention

The present invention relates to an optical pickup device that projects a light beam to an optical recording medium so that information can be recorded or reproduced. In particular, the present invention relates to structure of a beam shaping element which is equipped in the optical pickup device so as to convert a light intensity distribution of the light beam.

### Description of Related Art

Recently, optical recording media including a compact disc (hereinafter referred to as "a CD") and a digital versatile disc (hereinafter referred to as "a DVD") have become commonplace and widely available. Further, in order to increase a quantity of information recorded on the optical recording medium, researches to realize higher recording density of the optical recording medium have been carried on. As a result, a high density optical recording medium such as a Blu-ray Disc (Registered Trademark ; hereinafter referred to as "a BD") or a High Definition DVD (HD DVD) is being available in the market, for example.

When such an optical recording medium is read or written, an optical pickup device is generally used that projects a light beam to the optical recording medium so that information can be reproduced or recorded on the medium. In such an optical pickup device, it is required that spot diameter of the light beam which is condensed on a recording surface of the optical recording medium, is made smaller when it is applied to the optical recording medium whose recording density is made higher.

A size of the spot diameter is generally decided by a numerical aperture (NA) of an objective lens, a wavelength (λ) of a light source, and RIM intensity. Among them, the numerical aperture of the objective lens and the wavelength of the light source are defined in the standard specification. For example, the NA is 0.85 and the wavelength is 405 nm for a BD. Because of this situation, it is important to secure enough RIM intensity in order to improve a spot quality of the light beam which is condensed on the recording surface of the optical recording medium. At this point, the term "RIM intensity" means ratio of light intensity at a rim of a pupil to a maximum light intensity in an incident pupil of the objective lens.

In the meantime, a light beam which is emitted from a semiconductor laser used in an optical pickup device has light intensity distribution in a shape of ellipse. As a result, a method has been utilized that the RIM intensity is secured by making the light beam emitted from the semiconductor laser to have the light intensity distribution in a shape of circle by means of a prism or a beam shaping element in which a diffraction grating is disposed in an incident surface and/or an outgoing surface of the light beam as disclosed in JP-A-2003-121780.

However, in a structure performing beam shaping by utilizing the beam shaping element such as prism or the like, because number of parts of an optical system increases, it causes a problem that the optical pickup device becomes large in size, a problem that work load of assembling operation becomes heavy and the like. In this regard, a beam shaping element is proposed in JP-A-2001-273665 which has an incident surface and a reflecting surface that are disposed in non parallel relation, and performs the beam shaping by changing substantially an aspect ratio of a light having a far field pattern whose cross section is in a shape of ellipse. This beam fairing element also carries out a function as an upstand mirror, it is possible to perform the beam shaping without increasing the number of parts of the optical system, and therefore, it is useful.

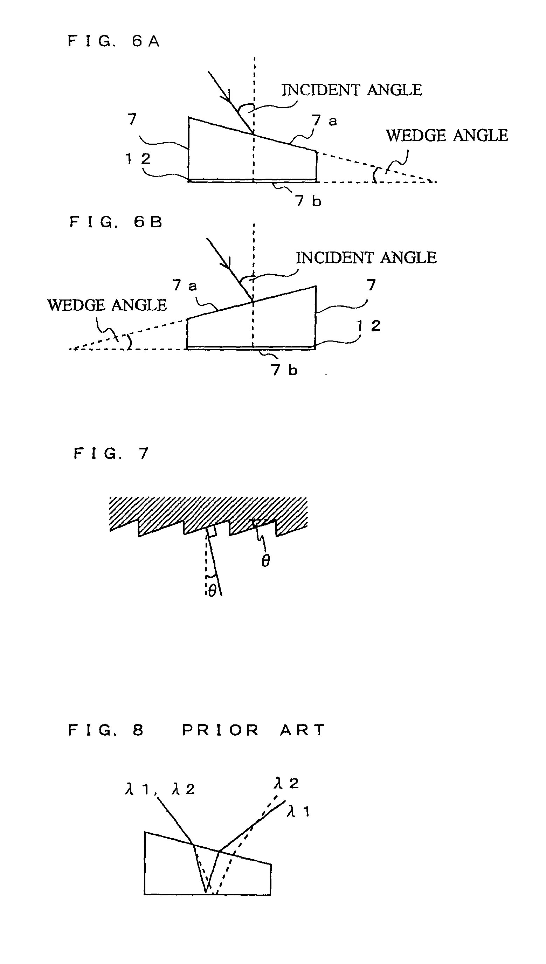

However, if the beam shaping element disclosed in JP-A-2001-273665 is utilized in a structure of the optical system for optical pickup device which is compatible with a plurality of wavelength of the light beams, a problem is caused that a direction of optical axis of reflected light reflected by the beam shaping element becomes different by the wavelength of the light beam. This is because refraction angles become different by a difference of wavelength of the light beam for color dispersion of a glass material which composes the beam shaping element as shown in Fig. 8 when the light beam passes through the beam shaping element.

In this regard, in a system disclosed in JP-A-2001-273665 it is described that the directions of the light beams which are stood up by the beam shaping element can be matched even if wavelengths of the light beams are different, i.e., the optical axes for these light beams can be matched, by arranging differently the optical axes of light beams coming into a collimator lens and the beam shaping element for every light source emitting light beam having a different wavelength. However, in a case for such a structure a problem is caused that a work load of an adjusting process of the optical axis becomes heavy when the optical pickup device is assembled. Further, if a two wavelengths integrated laser diode that has two light emission points so that two light beams of different wavelengths can be emitted, for example, two wavelengths laser diode such as monolithic type or hybrid type, is utilized as the light source in order to make the optical pickup device smaller, a problem is caused that it becomes very difficult to match the directions of the light beams which is stood up by the beam shaping element for light beam having different wavelengths.

### SUMMARY OF THE INVENTION

In view of the above described problems, it is an object of the present invention to provide an optical pickup device compatible with two different wavelengths of the light beams which can secure high RIM intensity without increasing the number of parts, and can reduce the work load of assembling operation for the device.

To attain the above described object, the present invention is characterized by that an optical pickup device includes: two light sources which emit light beams having different wavelengths; a parallel ray converting means which converts the light beam emitted from the light sources into parallel rays; a beam shaping element which has an incident surface and a reflecting surface that are disposed in non parallel relation, and makes a light intensity distribution of the light beam emitted from the light sources that has the light intensity distribution in a shape of ellipse, close to a circular shape by reflecting the parallel rays coming from the incident surface by the reflecting surface; a light condensing means which condenses the light beam reflected by the reflecting surface of the beam shaping element on a recording surface of an optical recording medium; and a photo detecting means which receives a reflected light reflected by the recording surface, and in the optical pickup device, a diffraction grating is formed on the reflecting surface of the beam shaping element, at least one of the two light beams having different wavelengths emitted from the light source is diffracted by the diffraction grating, and directions of optical axes of the two light beams which are reflected by the reflecting surface and come into the light condensing means are made substantially the same.

By this structure, influence of the color dispersion (directions of optical axes of light beams having different wavelengths become different) generated in the beam shaping element can be prevented by forming the diffraction grating on the reflecting surface of the beam shaping element. As a result, a work load of assembling operation for an optical pickup device can be reduced in comparison with a structure in the conventional technology that prevent the influence of the color dispersion by adjustment of location of the light sources. Further, an optical pickup device can give a better spot with high RIM intensity without increasing number of parts for a plurality of wavelengths because the beam shaping element can perform a function as an upstand mirror.

Further, it is preferable in the optical pickup device structured as above described that the diffraction grating has a grating pitch which is a predetermined regular interval, and the diffraction grating extends in a direction substantially perpendicular to an incident direction of the parallel rays which come into the beam shaping element.

By this structure because a diffraction pattern formed on the beam shaping element has simple arrangement, it is easy to realize the beam shaping element which can prevent the influence of the color dispersion.

Further, it is preferable in the optical pickup device structured as above described that the diffraction grating is made in a blaze type and only any one of the two light beams is diffracted by the diffraction grating.

By this structure because the diffraction grating is made in the blaze type and only any one of the two light beams having different wavelengths emitted from the light sources is diffracted by the diffraction grating, it is possible to reduce loss of light when preventing the influence of color dispersion.

Further, it is preferable in the optical pickup device structured as above described that the two light sources are integrated in one piece and emit the two light beams from substantially the same position.

In the optical pickup device according to the present invention, it is not necessary to perform the adjustment to prevent the influence of the color dispersion for location of the two light sources because the influence of the color dispersion generated in the beam shaping element can be prevented by the diffraction grating formed on the beam shaping element. As a result, a structure in which the light sources that emit the two light beams having different wavelengths is integrated in one piece, can be realized. By such structure, it is possible to realize downsizing of the optical pickup device in comparison with a structure in which the light sources are arranged in a plurality of positions.

### BRIEF DESCRIPTION OF THE DRAWINGS

Fig. 1 is a schematic diagram to show one example of structure of an optical system of optical pickup device according to the present embodiment.
Fig. 2A is a schematic perspective view to show a structure of a beam shaping mirror which is included in the optical pickup device according to the present embodiment.
Fig. 2B is a schematic cross sectional view to show a structure of a beam shaping mirror which is included in the optical pickup device according to the present embodiment.
Fig. 2C is an enlarged view of a part which is surrounded by a dotted line circle shown in Fig. 2B.
Fig. 3 is a schematic diagram to show a situation when a light beam emitted from a light source is performed a beam shaping by the beam shaping mirror according to the present embodiment.
Fig. 4 is a schematic diagram to show behavior of light beams when two light beams having different wavelengths come into the beam shaping mirror according to the present embodiment.
Fig. 5 is a table to show result of simulation with respect to structures of diffraction gratings of the beam shaping mirror according to the present invention.
Fig. 6A is an explanatory diagram to explain parameters used in the simulation with respect to structures of diffraction gratings of the beam shaping mirror.
Fig. 6B is an explanatory diagram to explain parameters used in the simulation with respect to structures of diffraction gratings of the beam shaping mirror.
Fig. 7 is a diagram to show an example of variation of a structure of the diffraction grating of the beam shaping mirror according to the present embodiment.
Fig. 8 is an explanatory diagram to explain problem of a beam shaping element in conventional technology.

### DETAILED DESCRIPTION OF THE PREFERRED EMBODIMENTS

Hereinafter, embodiments of the present invention will be described in detail with reference to the attached drawings. Note that the embodiments described here are merely examples, and the present invention is not limited only to the embodiments described here.

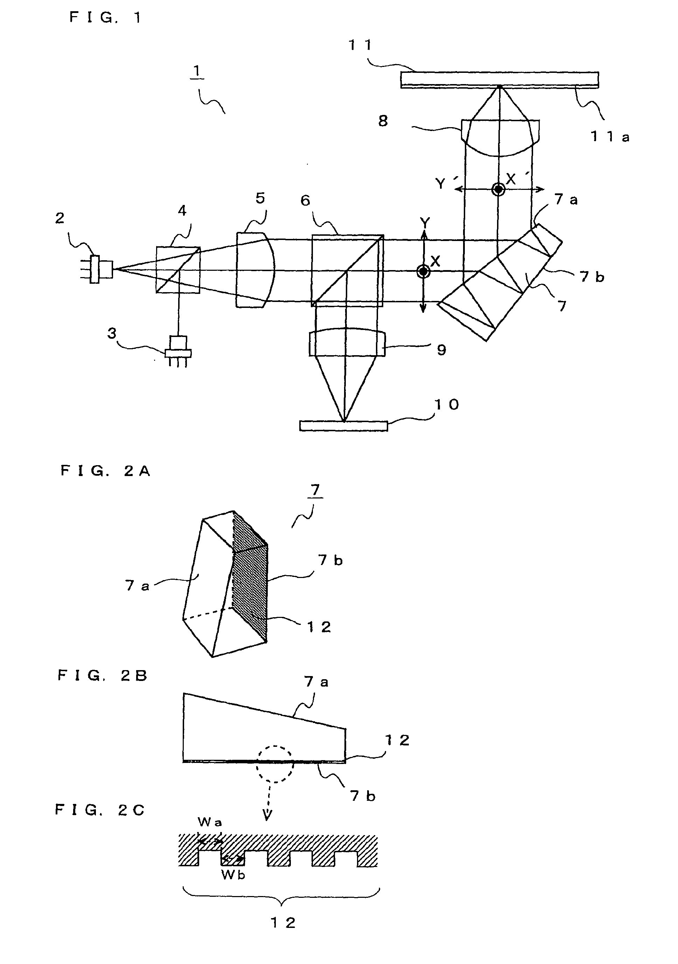

Fig. 1 is a schematic diagram to show one example of structure of an optical system of optical pickup device according to the present embodiment. The optical pickup device 1 according to the present embodiment is designed to be compatible with two kind of optical recording media 11 such as a BD and a DVD. The optical pickup device 1 is equipped with a first light source 2, a second light source 3, a dichroic prism 4, a collimator lens (a parallel ray converting means) 5, a beam splitter 6, a beam shaping mirror (beam shaping element) 7, an objective lens (light condensing means) 8, a condensing lens 9, and photo detector (photo detecting means) 10. At this point, only a light path of the light beam emitted from the first light source 2 is shown in Fig. 1 and the light path of the light beam emitted from the second light source 3 is omitted.

The first light source 2 is a laser diode which emits a light beam having single wavelength and emits the light beam having a wavelength of 405 nm which is used for a BD. The second light source 3 is a laser diode which emits a light beam having single wavelength and emits the light beam having a wavelength of 650 nm which is used for a DVD. The light beam emitted from the first light source 2 or the second light source 3 is sent to the dichroic prism 4.

The dichroic prism 4 lets the light beam emitted from the first light source 2 pass through itself and reflects the light beam emitted from the second light source 3. At this point, the first light source 2 and the second light source 3 are arranged such that axes of the light beams after passing the dichroic prism 4 are substantially the same. The light beam passed through the dichroic prism 4 is sent to the collimator lens 5.

The collimator lens 5 converts divergent rays emitted from the first light source 2 or the second light source 3 into parallel rays which are substantially parallel to the light axis. The light beam passed through the collimator lens 5 is sent to the beam splitter 6.

The beam splitter 6 let the light beams emitted from the first light source 2 and the second light source 3 pass through itself to direct them to a side of the optical recording medium 11 and at the same time it reflects the light beam reflected by a recording surface 11 a of the optical recording medium 11 to direct to a side of the photo detector 10. The light beam emitted from the first light source 2 or the second light source 3 and passed the beam splitter 6 through, is sent to the beam shaping mirror 7.

The beam shaping mirror 7 has a function to make the light intensity distribution of the light beams emitted from the first light source 2 and the second light source 3 which have the light intensity distribution in a shape of ellipse, close to a circular shape. At the same time the beam shaping mirror 7 has a function as an upstand mirror which reflects the light beam sent from the beam splitter 6 at a reflecting surface to make the direction of the light beams emitted from the first light source 2 and the second light source 3 stand toward the optical recording medium 11.

Further, at the beam shaping mirror 7, a phenomenon is caused that the directions of optical axes of the reflected light beams become different each other because a difference is generated in the refraction angles due to the color dispersion of transparent member which composes the beam shaping mirror 7 when the light beams having different wavelengths come into. The beam shaping mirror 7 also has a function to compensate this phenomenon. Detailed explanation about structure of the beam shaping mirror 7 will be given later. The light beam reflected by the beam shaping mirror 7 is sent to the objective lens 8.

The objective lens 8 condenses the incident light beam on the recording surface 11a of the optical recording medium 11. The objective lens 8 is mounted on an actuator which is not shown, and the objective lens 8 is made capable of moving at least in a focusing direction which is parallel to the optical axis of the objective lens 8 and in a tracking direction which is parallel to a radial direction of the optical recording medium 11 by this actuator. By this arrangement, a position of the objective lens 8 is controlled such that a focusing position of the objective lens 8 is always kept on the recording surface 11a, and such that a spot position of the light beam which is condensed by the objective lens 8 follows a track formed on the optical recording medium 11. The former means focus adjustment, and the latter means tracking adjustment.

The light beam reflected by the optical recording medium 11 passes through the objective lens 8, reflected by the beam shaping mirror 7, and reflected again by the beam splitter 6. The light beam reflected by the beam splitter 6, is condensed by the condensing lens 9 to focus on a light receiving area (not shown) of the photo detector 10.

The photo detector 10 has a function to convert a light signal received on the light receiving area (not shown) into an electric signal. The electric signal from the photo detector 10 is utilized as a reproduced signal to reproduce information, a focus error signal, a tracking error signal to perform the focus adjustment or the tracking adjustment for the objective lens 8 or the like.

Next, the beam shaping mirror 7 in the present embodiment will be explained in detail. Fig. 2A is a schematic perspective view to show a structure of the beam shaping mirror 7 according to the present embodiment, Fig. 2B is a schematic cross sectional view to show a structure of the beam shaping mirror 7 according to the present embodiment, and Fig. 2C is an enlarged view of a part which is surrounded by a dotted line circle shown in Fig. 2B.

The beam shaping mirror 7 is made of a transparent member such as glass, transparent resin, and the like, and it is formed in a shape of trapezoid to have an incident surface 7a and a reflecting surface 7b which are disposed in non parallel relation. A reflection function of the reflecting surface 7b is given by forming a metal layer, dielectric multi-layers or the like on the transparent member. Positional relationship of the incident surface 7a and the reflecting surface 7b is decided properly in consideration of distribution situation of the light intensity distribution of the light beam having light intensity distribution in a shape of ellipse to be shaped by the beam shaping mirror 7, a refraction index of the transparent member, an incident angle of the light beam coming into the beam shaping mirror 7 and the like.

Further, a diffraction grating 12 which extends in a direction perpendicular to a surface of Fig. 2B is formed on the reflecting surface 7b of the beam shaping mirror 7. This diffraction grating 12 is composed by patterning of depressed portions and salients which are arranged alternately, and each of the depressed portions has the same width Wa and each of the salient has the same width Wb as shown in Fig. 2C. Duty ratio of the diffraction grating 12 which is defined by a formula {Wa / (Wa + Wb)} is given as 0.5. In other words, the diffraction grating 12 formed on the reflecting surface 7b has a predetermined regular grating pitch. At this point, a hatched part in Fig. 2C indicated by diagonal lines shows the transparent member which composes the beam shaping mirror 7.

The beam shaping mirror 7 which is structured as above described, is disposed at a position into which the parallel rays come in the optical pickup device 1 such that the diffraction grating 12 formed on the reflecting surface 7b is disposed to extend in a direction substantially perpendicular to incident direction of the light beam emitted from the first light source 2 or the second light source 3 and converted into the parallel rays.

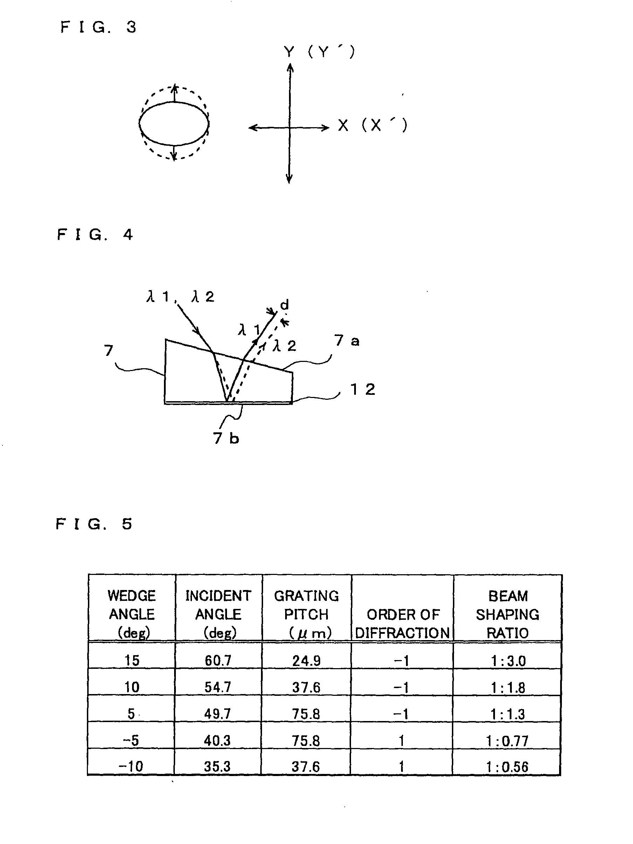

In a case when the optical pickup device 1 is structured as described above, the light beam which is emitted from the first light source 2 or the second light source 3 and has the light intensity distribution in a shape of ellipse, the beam shaping is performed for the light beam such that the light intensity distribution is made close to a circular shape by expanding in a direction of short axis as shown in Fig. 3. By this expansion, higher RIM intensity can be realized and it becomes possible to form a better spot on the recording surface 11a of the optical recording medium 11.

Fig. 3 is a schematic diagram to show a situation when the beam shaping is performed for the light beam emitted from the first light source 2 or the second light source 3 by the beam shaping mirror 7 according to the present embodiment. In Fig. 3, directions indicated by X (X') and Y (Y') correspond to the directions indicated by X (X') and Y (Y') shown in Fig. 1, respectively. At this point, the direction X (X') is perpendicular to surface of Fig. 1.

The light beams having different wavelengths λ1 and λ2, in this embodiment λ1 corresponds to the light beam having wavelength of 405 nm for a BD and λ2 corresponds to the light beam having wavelength of 650 nm for a DVD. When the light beams come into the beam shaping mirror 7, as a difference in the refraction angles is made due to the color dispersion of the transparent member which composes the beam shaping mirror 7, it causes misalignment of the incident angles into the reflecting surface 7b as shown in Fig. 4. However, because the diffraction grating 12 is formed on the beam shaping mirror 7 and the light beams having the wavelengths λ1 and λ2 are diffracted in the predetermined directions which are different each other, the directions of the optical axes of the light beams having the wavelengths λ1 and λ2 which are reflected on the reflecting surface 7b, become substantially the same. As a result, it becomes possible to form a better spot on the recording surface 11a of the optical recording medium 11 for two light beams having different wavelengths without matching of the optical axes by the adjustment of location of the first light source 2 and the second light source 3 performed in the conventional technology.

Fig. 4 is a schematic diagram to show behavior of light beams when two light beams having different wavelengths come into the beam shaping mirror 7 according to the present embodiment. At this point, the light beams having different wavelengths λ1 and λ2 which come into the beam shaping mirror 7 and are reflected, still have a slight shift d of optical axes, and it causes a problem of influence on coma aberration, however, it remains in a range of latitude which can be absorbed by structure of the objective lens 8 and the like.

Next, structure of the diffraction grating 12 of the beam shaping mirror 7 will be described based on simulation result shown in Fig. 5. Fig. 6A and Fig. 6B are explanatory diagrams to explain parameters used in the simulation with respect to structures of the diffraction gratings of the beam shaping mirror 7. Hereafter the explanation will be also given with reference to Fig. 6A and Fig. 6B.

First, calculations are performed such that the wavelengths of the light beams coming into the beam shaping mirror 7 are 405 nm and 650 nm, a material of the transparent member composing the beam shaping mirror 7 is Polymethyl-Methacrylate (PMMA), and the maximum distance between the incident surface 7a and reflecting surface 7b are 3 mm, when the simulation is achieved. At this point it is supposed that the PMMA has a refraction index for D line (nd) = 1.49, and an Abbe's number (Vd) = 58.

In the simulation an wedge angle which is made by the incident surface 7a and the reflecting surface 7b (See, Fig. 6A and Fig. 6B) and an incident angle which is made by a direction of the light beam coming into the reflecting surface 7b and a normal line of the reflecting surface 7b (See, Fig. 6A and Fig. 6B) are set beforehand. Then the beam spot which is formed by the light beam diffracted and reflected by the diffraction grating 12 on the reflecting surface 7b when the light beam comes into the beam shaping mirror 7, is observed for each of the wavelength with changing a grating pitch and an order of diffraction of the diffraction grating 12 formed on the reflecting surface 7b. The simulation is performed in a manner that a condition is searched in which directions of the optical axes become substantially the same from the observation results for the above described two light beams having the different wavelengths.

At this point, the wedge angle is supposed as positive when the incident surface 7a and the reflecting surface 7b are in the relation shown in Fig. 6A, and it is supposed as negative when the incident surface 7a and the reflecting surface 7b are in the relation shown in Fig. 6B. Further, the incident angle is adjusted in a condition where the direction of the incident light beam into the beam shaping mirror 7 and the direction of the output light beam from the beam shaping mirror 7 reflected by the reflecting surface 7b, becomes substantially perpendicular.

By the results of the simulation it is identified that it is possible to make the directions of optical axes of the two light beams having the different wavelengths substantially the same with compensating the influence of the color dispersion by properly selecting the order of diffraction and the grating pitch for respective wedge angles. As for the wedge angle, it is preferable that the wedge angle is decided in consideration of a situation of the light intensity distribution of the light beam which is different by utilized light source and the like because the beam shaping ratio is largely changed by setting of the wedge angle.

The beam shaping ratios shown in Fig. 5 are indicated by ratio of expanding rate in X direction and Y direction (see, Fig. 3 for these X, Y directions) when the light beam is faired by the beam shaping mirror 7. At this point, in the optical pickup device 1 according to the present embodiment, a structure is employed in which the short axis of the light beam is expanded by the beam shaping mirror 7 for shaping. However, it is possible to compress one direction of the light beam by adjustment of the wedge angle as shown in Fig. 5. For example, it is also preferable a structure in which the long axis of the light beam is compressed for shaping by arrangement of the beam shaping mirror 7 in a direction shown in Fig. 6B.

The beam shaping mirror 7 as described above has a structure in which the diffraction grating 12 diffracts both of the two light beam having different wavelengths to make both directions of the optical axes of the diffracted lights having two wavelengths substantially the same. The present invention is not limited only to this structure. It is no problem to employ a structure in which only any one of the two light beams is diffracted by the diffraction grating 12 formed on the beam shaping mirror 7 and the directions of the optical axes of the two light beams from the beam shaping mirror 7 to the objective lens 8 are made substantially the same.

In particular, if any one of the two light beam having the different wavelengths can be diffracted and directions of the optical axes of two light beams having different wavelengths from the beam shaping mirror 7 to the objective lens 8 are made substantially the same by making the diffraction groove formed on the diffraction grating 12, for example, blaze type which is saw blade type groove as shown in Fig. 7, and selecting a blaze angle θ (angle between normal line of a surface of the diffraction grating and normal line of surface of each of the groove), loss of light intensity can become small even utilizing the diffracted light because efficiency of the diffraction is improved by the blaze type grooves. As a result, this kind of structure is preferable from a view point of improvement of utility efficiency of the light beam in the optical pickup device.

Further, in the optical pickup device 1 described above, a structure is employed in which the light source 2 for a BD and the light source 3 for a DVD are arranged in two different positions. The present invention is not limited only to this structure. It is no problem also to employ a structure in which these two light sources for BD and DVD are integrated in, for example, a two wavelength combination laser diode that has two light emission points for emitting two types of light beams having different wavelengths, in order to dispose the light sources at one position. This is also preferable because the optical pickup device can be downsized by this arrangement.

Further, the optical pickup device 1 according to the present embodiment has a structure to be compatible with a BD and a DVD, however, the present invention is not limited only to this structure. Needless to say, the present invention can be widely applied to any optical pickup device which is compatible with two kind of optical recording media utilizing two different wavelengths.

In accordance with the present invention, high RIM intensity can be secured and a work load of assembling operation of device can be decreased without increasing number of parts, for an optical pickup device compatible with two light beams having different wavelengths. As a result, it is useful as an optical pickup device compatible with two kind of optical recording media.

## Claims

1. An optical pickup device comprising:
two light sources which emit light beams having different wavelengths;
a parallel ray converting means which converts the light beam emitted from the light sources into parallel rays;
a beam shaping element which has an incident surface and a reflecting surface that are disposed in non parallel relation, and makes a light intensity distribution of the light beam emitted from the light sources that has the light intensity distribution in a shape of ellipse, close to a circular shape by reflecting the parallel rays coming from the incident surface by the reflecting surface;
a light condensing means which condenses the light beam reflected by the reflecting surface of the beam shaping element on a recording surface of an optical recording medium; and
a photo detecting means which receives a reflected light reflected by the recording surface, wherein
a diffraction grating is formed on the reflecting surface of the beam shaping mirror,
at least one of the two light beams having different wavelengths emitted from the light source is diffracted by the diffraction grating, and
directions of optical axes of the two light beams which are reflected by the reflecting surface and come into the light condensing means are made substantially the same.

2. The optical pickup device according to claim 1, wherein the diffraction grating has a grating pitch which is a predetermined regular interval, and the diffraction grating extends in a direction substantially perpendicular to an incident direction of the parallel rays which come into the beam shaping element.

3. The optical pickup device according to claim 2, wherein the diffraction grating is made in a blaze type and only any one of the two light beams is diffracted by the diffraction grating.

4. The optical pickup device according to any one of claim 1 to claim 3, wherein the two light sources are integrated in one piece and emit the two light beams from substantially the same position.
